# EUROPÄISCHE PATENTSCHRIFT

(11) **EP 3 393 705 B1**
(45) Veröffentlichungstag und Bekanntmachung des Hinweises auf die Patenterteilung: **11.09.2024**
(21) Anmeldenummer: 16834015.6
(22) Anmeldetag: 14.12.2016
(51) Int. Cl.: B23B 51/00, B23P 15/28, B23C 5/00, B23B 27/00

(54) **ZERSPANUNGSWERKZEUG-GRUNDKÖRPER**
CUTTING-TOOL MAIN BODY
CORPS DE BASE D'UN OUTIL À ENLÈVEMENT DE COPEAUX

(30) Priorität: 22.12.2015 AT 38815 U
(43) Veröffentlichungstag der Anmeldung: 31.10.2018
(73) Patentinhaber: Ceratizit Austria Gesellschaft M.b.H., 6600 Reutte (AT)
(72) Erfinder: SIMMA, Hans Peter, 6600 Reutte (AT); BIERBAUMER, Robert, 6600 Reutte (AT); WIBMER, Bernd, 6600 Reutte (AT); RONACHER, Herbert, 6600 Reutte (AT); VENTURINI, Remus, 6600 Reutte (DE); SCHLEINKOFER, Uwe, 6600 Reutte (AT)
(74) Vertreter: Ciesla, Dirk
(86) Internationale Anmeldenummer: PCT/AT2016/000099
(87) Internationale Veröffentlichungsnummer: WO 2017/106885

(56) Entgegenhaltungen:
- EP-A2- 0 508 152
- WO-A1-99/00208
- DE-U1- 20 305 081
- US-A1- 2006 006 576

## Beschreibung

Die vorliegende Erfindung betrifft einen Zerspanungswerkzeug-Grundkörper, ein Zerspanungswerkzeug mit einem solchen Grundkörper und ein Verfahren zum Herstellen eines Zerspanungswerkzeug-Grundkörpers.

Für eine zerspanende Bearbeitung von Werkstücken, wie insbesondere Fräsen, Drehen oder Bohren, kommen häufig Werkzeuge zum Einsatz, deren Schneiden aus Hartmetall (cemented carbide) oder Cermet gebildet sind. Die Werkzeuge sind dabei üblicherweise dazu ausgebildet, an einer Bearbeitungsmaschine befestigt zu werden, die insbesondere eine Bohr-, Dreh- oder Fräsmaschine oder ein Bearbeitungszentrum sein kann. Diese Werkstoffe weisen Hartstoffteilchen auf, die in einen duktilen metallischen Binder eingebettet sind, der insbesondere als Hauptbestandtelle Cobalt, Nickel und/oder Eisen aufweisen kann, insbesondere Cobalt und/oder Nickel. Die Hartstoffteilchen sind üblicherweise durch Karbide, Nitride und Karbonitride von Metallen der Gruppen IV bis VI des Periodensystems der Elemente gebildet. Der Anteil der Hartstoffteilchen an dem Werkstoff beträgt typischerweise zumindest 70 Gewichtsprozent und der Anteil des metallischen Binders beträgt typischerweise bis zu 30 Gewichtsprozent, meist jedoch unter 20 Gewichtsprozent.

Es ist bekannt, solche Zerspanungswerkzeuge einstückig aus Hartmetall oder Cermet auszubilden und die mit dem zu bearbeitenden Werkstück in Eingriff kommenden Schneiden z.B. durch eine Schleifbearbeitung herzustellen. Insbesondere bei größeren Durchmessern und größeren Längen des Werkzeugs führt dies aber zu hohen Kosten bzw. im Falle eines Nachschleifens zu einem hohen logistischen Aufwand.

Andererseits ist es auch bekannt, nur die mit dem zu bearbeitenden Werkstück in Eingriff kommenden Schneiden aus Hartmetall oder Cermet als auswechselbare Schneideinsätze auszubilden, die an entsprechenden Sitzen an einem Zerspanungswerkzeug-Grundkörper befestigt werden. In diesem Fall wird der Zerspanungswerkzeug-Grundkörper üblicherweise aus Stahl gebildet, wobei bei größeren Längen des Werkzeugs zum Teil auch andere Materialien zum Einsatz kommen. Insbesondere bei großen Längen des Werkzeugs bereiten bei solchen Lösungen aber Vibrationen und teilweise plastische Deformationen des Grundkörpers Probleme.

US 2006/0006576 A1 beschreibt einen Zerspanungswerkzeug-Grundkörper nach dem Oberbegriff von Anspruch 1 sowie ein Verfahren zum Herstellen eines Zerpanungswerkzeug-Grundkörpers, insbesondere ein Strangpressverfahren zum Herstellen von gesinterten Rohlingen, die zumindest einen internen, sich spiralförmig erstreckenden Kanal aufweisen.

DE 203 05 081 U1 beschreibt eine Spann- und Justiervorrichtung für ein Zerspanungswerkzeug mit einem Schneidenträger aus Hartmetall.

Es ist Aufgabe der vorliegenden Erfindung, einen verbesserten Zerspanungswerkzeug-Grundkörper, ein verbessertes Zerspanungswerkzeug mit einem solchen Grundkörper und ein verbessertes Verfahren zum Herstellen eines Zerspanungswerkzeug-Grundkörpers bereitzustellen, die eine insgesamt wirtschaftlichere Zerspanung mit geringen Vibrationen und weitgehender geometrischer Gestaltungsfreiheit in Bezug auf das Zerspanungswerkzeug auch bei lang auskragenden Werkzeugen ermöglichen.

Die Aufgabe wird durch einen Zerspanungswerkzeug-Grundkörper nach Anspruch 1 gelöst. Vorteilhafte Weiterbildungen sind in den abhängigen Ansprüchen angegeben.

Insbesondere sind auch der Sitz und die Gewindebohrung aus dem Hartmetall oder Cermet ausgebildet. Aufgrund der durchgängigen einstückigen Gestaltung des Grundkörpers von dem ersten Ende bis zu dem zweiten Ende aus Hartmetall wird eine besonders vibrationsarme Ausgestaltung des Grundkörpers erreicht und auch eine plastische Deformation des Grundkörpers bei der Bearbeitung ist verhindert, sodass auch große Auskragungslängen des Werkzeugs ermöglicht werden. Ferner wird mit der Ausbildung aus Hartmetall oder Cermet auch eine verbesserte Verschleißbeständigkeit des Grundkörpers, insbesondere unter Einwirkung von Spänen im Bereich einer Spannut, erreicht. Aufgrund der durchgängigen Gestaltung aus Hartmetall oder Cermet können auch komplexe Geometrien bereitgestellt werden, insbesondere bestehen auch große Freiheiten bei der Gestaltung von Spanräumen. Da der zumindest eine Sitz für den auswechselbaren Schneideinsatz und die der Befestigung des Schneideinsatzes dienende Gewindebohrung unmittelbar in dem Hartmetall oder Cermet ausgebildet sind, wird ferner eine einfache Konstruktion bereitgestellt, bei der die eigentliche Schneide des Werkzeugs, die an dem Schneideinsatz vorgesehen ist, platzsparend mittels einer Befestigungsschraube an dem Grundkörper befestigt und in einfacher Weise ausgewechselt werden kann. Gegenüber Ausgestaltungen, bei denen das erste Ende und das einen Sitz für einen auswechselbaren Schneideinsatz aufweisende zweite Ende aus mehreren Komponenten bestehen, die durch stoffschlüssiges Fügen zu einem Zerspanungswerkzeug-Grundkörper zusammengefügt sind, wird eine größere Gestaltungsfreiheit insbesondere in Bezug auf Spanräume erreicht und die Herstellung ist zugleich kostengünstiger. Die Gewindebohrung des Sitzes aus Hartmetall oder Cermet kann dabei insbesondere zum unmittelbaren Zusammenwirken mit dem Außengewinde einer Befestigungsschraube für den Schneideinsatz ausgebildet sein, es ist z.B. aber auch möglich, zwischen dem Außengewinde der Befestigungsschraube und dem Innengewinde aus Hartmetall oder Cermet noch ein z.B. spiralförmiges Zwischenelement vorzusehen, sodass das Außengewinde der Befestigungsschraube über das Zwischenelement mittelbar mit dem Innengewinde der Gewindebohrung zusammenwirkt. Der Sitz und die Befestigungsbohrung können bei einer pulvermetallurgischen Herstellung des Grundkörpers aus Hartmetall oder Cermet insbesondere in kostengünstiger und einfacher Weise durch mechanische Bearbeitung eines Grünlings für den Grundkörper vor dessen Sinterung ausgebildet werden. Der Sitz kann insbesondere zur sogenannten "radialen" Anordnung des Schneideinsatzes ausgebildet sein, bei der sich der Schneideinsatz mit seiner Haupterstreckungsebene im Wesentlichen in radialer Richtung erstreckt und die Befestigungsbohrung im Wesentlichen in tangentialer Richtung verläuft. Insbesondere bei einer derartigen Anordnung ist das Risiko von unerwünschten Schwingungen aufgrund des für den Sitz benötigten Platzes am zweiten Ende des Grundkörpers hoch und die Vorteile der Erfindung zeigen sich besonders deutlich.

Gemäß einer Weiterbildung ist der Grundkörper mit zumindest einer Spannut versehen, die sich von dem Sitz in Richtung des ersten Endes erstreckt. Die Spannut kann sich dabei insbesondere bevorzugt über einen möglichst großen Bereich einer Längserstreckung des Grundkörpers erstrecken, um eine gute Spanabfuhr zu erreichen. Der die Spannut aufweisende Bearbeitungsbereich des Grundkörpers kann sich insbesondere über eine Länge erstrecken, die ein Mehrfaches des Durchmessers des zweiten Endes beträgt. Der Grundkörper kann ferner - insbesondere im Fall von mehreren Sitzen zur Aufnahme von Schneideinsätzen - auch mehrere Spannuten aufweisen. Die Spannuten können sich dabei z.B. im Wesentlich parallel zu einer Längsachse des Grundkörpers, schräg zu der Längsachse oder spiralförmig um die Längsachse erstrecken.

Gemäß einer Weiterbildung weist der Grundkörper eine Auskragungslänge von zumindest dem 2,5-fachen eines Durchmessers des Grundkörpers an dem den Sitz aufweisenden zweiten Ende auf. Bevorzugt beträgt die Auskragungslänge zumindest das 3-fache des Durchmessers. Insbesondere im Fall von solch großen Auskragungslängen bietet die Ausbildung aus Hartmetall oder Cermet im Hinblick auf Vibrationen und die Gefahr von plastischer Deformation des Grundkörpers Vorteile. Bei einer Ausgestaltung des Zerspanungswerkzeug-Grundkörpers für ein Werkzeug, bei dem die Schnittkräfte insbesondere in hohem Maße senkrecht zu der Längsachse einwirken, wie es insbesondere bei Kombinationswerkzeugen für eine Drehbearbeitung und ein Aufbohren oder ein Bohren ins Vollmaterial, bei Werkzeugen für eine Drehbearbeitung und bei Werkzeugen für eine Fräsbearbeitung der Fall ist, zeigen sich die Vorteile bereits bei Längen von etwas mehr als dem Zweifachen des Durchmessers deutlich. Bei anderen Werkzeugen, wie insbesondere Bohrwerkzeugen, werden insbesondere bei kleinen Durchmessern und großen Längen ebenfalls deutliche Vorteile erzielt.

Gemäß einer Weiterbildung weist der Grundkörper zumindest einen Kühlkanal zum Zuführen von Kühlmittel zu dem Bereich des zweiten Endes auf. In diesem Fall ist eine besonders effiziente Zerspanung ermöglicht. Der Kühlkanal kann dabei insbesondere bei einer pulvermetallurgischen Herstellung des Grundkörpers bereits vor einem Sintern in einem Grünling für den Grundkörper ausgebildet werden, z.B. durch mechanische Bearbeitung des Grünlings oder durch entsprechendes direktes Formen des Grünlings.

Gemäß einer Weiterbildung weist der zumindest eine Kühlkanal einen in Richtung des ersten Endes gerichteten Kühlmittelaustritt auf. In diesem Fall kann eine besonders vorteilhafte Rückspülung von im Betrieb erzeugten Spänen in Richtung des ersten Endes erfolgen, die sich insbesondere bei einer großen Länge eines Spanraumes besonders vorteilhaft auswirkt. Es kann allerdings auch eine Mehrzahl von Kühlmittelaustritten vorgesehen sein, von denen insbesondere auch ein oder mehrere in Richtung des zweiten Endes gerichtet sein können, um dort eine besonders effektive Kühlung zu erzielen. Gemäß einer bevorzugten Weiterbildung ist das Material des Grundkörpers Hartmetall und weist als Hauptbestandteile in einen metallischen Binder eingebettete Wolframkarbidkörner auf. Bevorzugt weist der metallische Binder als Hauptbestandteile Cobalt und/oder Nickel auf, insbesondere Cobalt.

Erfindungsgemäß ist der Grundkörper pulvermetallurgisch hergestellt und die Struktur der Gewindebohrung wurde vor einem Sintern des Grundkörpers eingebracht. Dies ermöglicht eine besonders kostengünstige Herstellung, da sich der Grünling für den Grundkörper vor dem Sintern zu dem Grundkörper gut mechanisch bearbeiten lässt, was nach dem Sintern nur noch schwierig durch eine Schleifbearbeitung möglich ist. Das Ausbilden der Gewindebohrung in dem Grünling ist in dem gesinterten Grundkörper an den Gewindegängen gut erkennbar.

Es ist zumindest ein Bereich des Grundkörpers geschliffen. In diesem Fall kann ein besonders guter Rundlauf des Grundkörpers bereitgestellt werden, da durch eine Schleifbearbeitung ein gegebenenfalls beim Sintern entstehender Verzug kompensiert werden kann. Erfindungsgemäß ist der Außenumfang des Grundkörpers an dem ersten Ende geschliffen.

In diesen Fall ist eine Kompensation eines etwaigen Verzugs in besonders einfacher und kostengünstiger Weise ermöglicht.

Gemäß einer Weiterbildung ist die Oberfläche des Zerspanungswerkzeug-Grundkörpers mit einer Hartstoffbeschichtung beschichtet. Die Hartstoffbeschichtung kann dabei bevorzugt eine keramische Hartstoffbeschichtung sein. In diesem Fall kann zuverlässig eine Verringerung der Lebensdauer des Zerspanungswerkzeug-Grundkörpers durch Korrosion verhindert werden. Insbesondere bei einer Ausbildung des Zerspanungswerkzeug-Grundkörpers aus Hartmetall oder Cermet tritt nämlich das Problem auf, dass insbesondere der metallische Binder durch die bei der Zerspanung verwendeten Kühl- und/oder Schmiermittel zunehmend angegriffen wird. Dabei wird der zwischen den Hartstoffteilchen befindliche metallische Binder ausgehend von der Oberfläche zunehmend ausgewaschen oder ausgelaugt (sogenanntes "cobalt leaching" im Fall von Cobalt-haltigem metallischem Binder), was zu einer zunehmenden Verschlechterung der mechanischen Eigenschaften des Hartmetalls bzw. Cermets führt. Aufgrund solcher verschlechterten mechanischen Eigenschaften kann es zu einem vorzeitigen Versagen des Zerspanungswerkzeug-Grundkörpers kommen. Die Hartstoffbeschichtung des Zerspanungswerkzeug-Grundkörpers erhöht ferner auch die Beständigkeit gegenüber mechanischen Belastungen. Es kann dabei z.B. insbesondere die gesamte Oberfläche des Grundkörpers beschichtet sein oder aber z.B. auch nur solche Bereiche der Oberfläche, die im Betrieb dem Kühl- und/oder Schmiermittel ausgesetzt sind. Folglich kann z.B. der Außenumfang des Grundkörpers im Bereich des ersten Endes gegebenenfalls unbeschichtet sein. Die Hartstoffbeschichtung kann dabei insbesondere in einem CVD- (chemical vapor depostion) oder einem PVD-Verfahren (physical vapor deposition) aufgebracht sein, wobei insbesondere eine Ausbildung in einem CVD-Verfahren eine zuverlässige Beschichtung auch in räumlich schwer zugänglichen Bereichen, wie insbesondere in der Gewindebohrung des Sitzes, ermöglicht. Das Aufbringen der Beschichtung kann dabei insbesondere nach einer Schleifbearbeitung des Grundkörpers erfolgen, um einen zuverlässigen Schutz des Grundkörpers zu erreichen. Für den Fall, dass z.B. nur der Außenumfang des Grundkörpers im Bereich des ersten Endes geschliffen wird, das im Betrieb des Zerspanungswerkzeugs in der Aufnahme einer Bearbeitungsmaschine aufgenommen ist, kann die Schleifbearbeitung z.B. aber auch erst nach dem Beschichten erfolgen.

Gemäß einer Weiterbildung ist der Sitz zur Aufnahme des Schneideinsatzes derart, dass er an dem zweiten Ende in radialer und axialer Richtung von dem Grundkörper hervorsteht, ausgebildet. Insbesondere kann der Grundkörper für ein Kombinationswerkzeug zum Aufbohren und für eine Innenbearbeitung durch Drehen ausgebildet sein. Bei derartigen Werkzeugen besteht ein besonders großer Bedarf, eine Bearbeitung auch mit großen Auskragungen zu ermöglichen und dabei Vibrationen möglichst gering zu halten und eine plastische Deformation des Werkzeugs zu verhindern. Dabei kann der Sitz insbesondere zur Aufnahme des Schneideinsatzes derart, dass er sich zumindest bis zu einer Längsachse des Grundkörpers erstreckt, ausgebildet sein, sodass auch ein Bohren ins volle Material ermöglicht ist.

Gemäß einer anderen Weiterbildung weist das zweite Ende eine Mehrzahl von Sitzen zur Aufnahme von auswechselbaren Schneideinsätzen auf. In diesem Fall kann auch ein Bohrwerkzeug oder ein Fräswerkzeug bereitgestellt werden, dass die beschriebenen Vorteile aufweist.

Die Aufgabe wird auch durch ein Zerspanungswerkzeug nach Anspruch 11 gelöst. Das Zerspanungswerkzeug weist einen zuvor beschriebenen Zerspanungswerkzeug-Grundkörper und zumindest einen auswechselbaren Schneideinsatz auf, der mittels einer Befestigungsschraube, die ein Durchgangsloch in dem Schneideinsatz durchgreift und mit der Gewindebohrung zusammenwirkt, an dem zumindest einen Sitz befestigt ist. Mit dem Zerspanungswerkzeug werden die zuvor mit Bezug auf den Grundkörper beschriebenen Vorteile erreicht. Insbesondere werden auch bei großen Baulängen in der Längsrichtung eine geringe Vibrationsneigung und eine hohe Beständigkeit gegen plastische Deformationen erzielt, es besteht hohe Gestaltungsfreiheit bezüglich der Werkzeuggeometrie und es wird dabei ein kostengünstiger Betrieb ermöglicht. Ferner wird eine erhöhte Verschleißbeständigkeit, insbesondere unter Spaneinwirkung, erreicht.

Die Aufgabe wird auch durch ein Verfahren zum Herstellen eines Zerspanungswerkzeug-Grundkörpers nach Anspruch 12 gelöst. Vorteilhafte Weiterbildungen sind in den abhängigen Ansprüchen angegeben.

Durch das einstückige Ausbilden des Grundkörpers aus Hartmetall oder Cermet wird auch bei großen axialen Längen des Grundkörpers eine nur geringe Vibrationsneigung erreicht. Der Sitz und die Gewindebohrung für die Befestigungsschraube werden in kostengünstiger und einfacher Weise vor dem Sintern ausgebildet und ermöglichen eine besonders platzsparende und einfache Befestigung von auswechselbaren Schneideinsätzen an dem Grundkörper. Dies ermöglicht wiederum einen besonders kostengünstigen Betrieb des Zerspanungswerkzeugs. Neben dem Sitz mit der Gewindebohrung können ferner auch weitere geometrische Ausgestaltungen in einfacher Weise vor dem Sintern ausgebildet werden, insbesondere z.B. eine oder mehrere Spannuten. Grundsätzlich ist es nicht zwingend erforderlich, den Sitz nach dem Sintern nachzubearbeiten. Wenn besonders geringe Toleranzen erfüllt werden sollen, können z.B. aber auch eine oder mehrere Flächen des Sitzes nach dem Sintern z.B. durch eine Schleifbearbeitung nachbearbeitet werden. Insbesondere können z.B. auch mehrere Sitze zur Aufnahme von auswechselbaren Schneideinsätzen in dem Grünling ausgebildet werden.

Gemäß einer Weiterbildung erfolgt das Ausbilden des Sitzes durch spanabhebende Bearbeitung des Rohlings. In diesem Fall ist eine besonders einfache und kostengünstige Fertigung ermöglicht.

Es erfolgt nach dem Sintern eine Schleifbearbeitung des Grundkörpers. Somit kann ein gegebenenfalls bei dem Sintern auftretender Verzug durch die Schleifbearbeitung kompensiert werden. Es wird ein Außenumfang des Grundkörpers geschliffen. Ferner können gegebenenfalls auch Anlageflächen zur Abstützung des Schneideinsatzes an dem Sitz durch Schleifen nachbearbeitet werden. Erfindungsgemäß wird der Außenumfang des Grundkörpers an dem zur Befestigen an einer Aufnahme ausgebildeten ersten Ende geschliffen, um den Schleifaufwand möglichst gering zu halten. Dies ermöglicht eine Kompensation des gegebenenfalls auftretenden Verzugs in besonders kostengünstiger Weise. Gemäß einer Weiterbildung wird die Oberfläche des Zerspanungswerkzeug-Grundkörpers mit einer Hartstoffbeschichtung beschichtet, bevorzugt mit einer keramischen Hartstoffbeschichtung. Dabei kann die Ausbildung der Hartstoffbeschichtung insbesondere in einem CVD- oder PVD-Verfahren erfolgen, bevorzugt anschließend an eine etwaige vorhergehende Schleifbearbeitung des Außenumfangs. Durch die Hartstoffbeschichtung kann ein vorzeitiges Versagen des Zerspanungswerkzeug-Grundkörpers zuverlässig verhindert werden.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine perspektivische Darstellung eines Zerspanungswerkzeugs gemäß einer ersten Ausführungsform;
- Fig. 2:: eine vergrößerte Darstellung des Zerspanungswerkzeugs gemäß der ersten Ausführungsform im Bereich eines zweiten Endes;
- Fig. 3:: eine schematische Darstellung des Zerspanungswerkzeug-Grundkörpers bei der ersten Ausführungsform;
- Fig. 4:: eine vergrößerte Darstellung im Bereich des zweiten Endes von Fig. 3;
- Fig. 5:: eine perspektivische Darstellung eines Zerspanungswerkzeugs gemäß einer zweiten Ausführungsform;
- Fig. 6:: eine vergrößerte Darstellung eines zweiten Endes des Zerspanungswerkzeugs gemäß der zweiten Ausführungsform;
- Fig. 7,: eine Seitenansicht des Zerspanungswerkzeugs gemäß der zweiten Ausführungsform; und
- Fig. 8;: eine vergrößerte perspektivische Darstellung eines zweiten Endes des Zerspanungswerkzeug-Grundkörpers bei der zweiten Ausführungsform.

### ERSTE AUSFÜHRUNGSFORM

Eine erste Ausführungsform eines Zerspanungswerkzeugs 1 wird im Folgenden unter Bezugnahme auf die Fig, 1 bis 4 eingehender beschrieben.

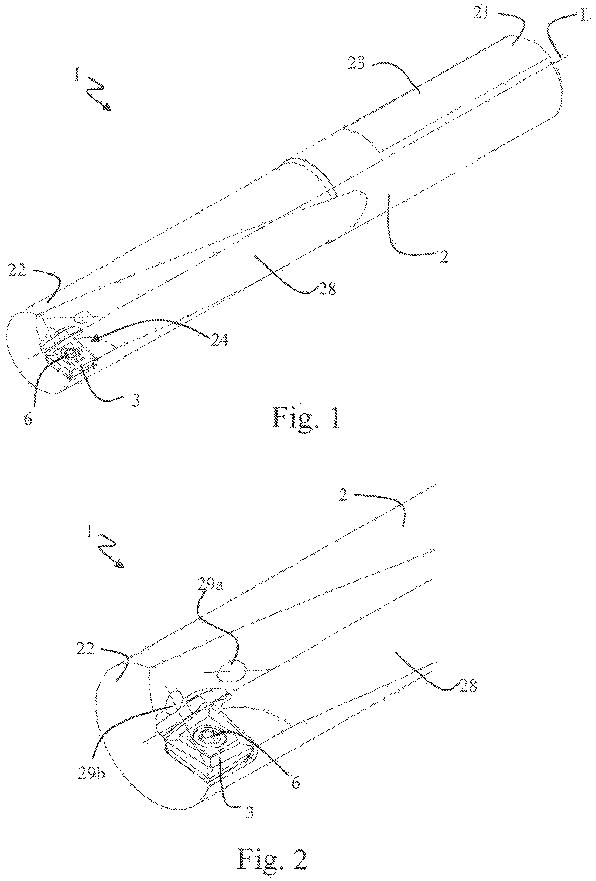

Das Zerspanungswerkzeug 1 gemäß der ersten Ausführungsform ist als ein Kombinationswerkzeug für ein Aufbohren und eine Innenbearbeitung durch Drehen ausgebildet und weist einen Zerspanungswerkzeug-Grundkörper 2 auf (im Folgenden auch einfach als Grundkörper 2 bezeichnet), der sich entlang einer Längsachse L erstreckt und ein erstes Ende 21 und ein zweites Ende 22 aufweist. Das erste Ende 21 ist zum Befestigen an einer Aufnahme einer (nicht-dargestellten) Bearbeitungsmaschine ausgebildet und kann insbesondere z.B. eine Haltefläche 23 zum Befestigen aufweisen, wie in Fig. 1 zu sehen ist. Es ist jedoch insbesondere auch möglich, auf eine solche Haltefläche 23 zu verzichten und das erste Ende 21 z.B. zylindrisch auszubilden oder eine oder mehrere anders geformte Halteflächen vorzusehen.

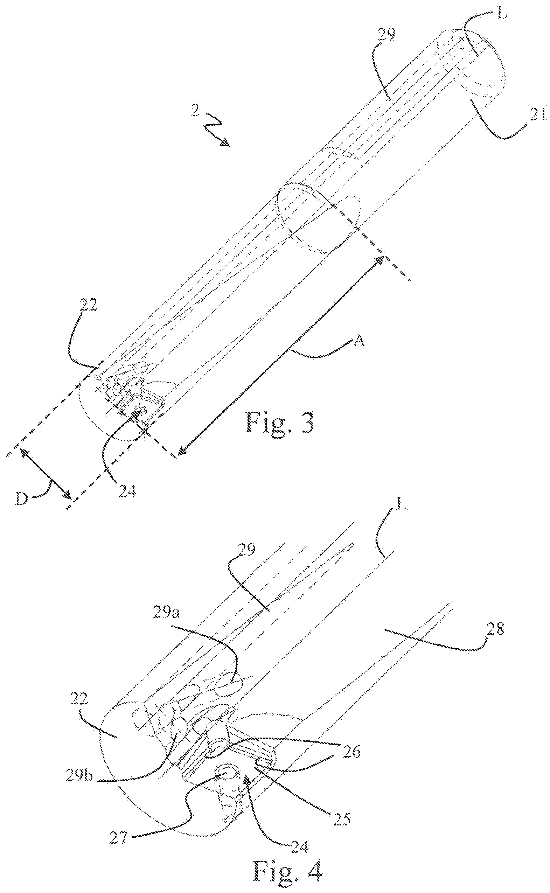

Das zweite Ende 22 des Grundkörpers 2 stellt einen Bearbeitungsabschnitt für eine zerspanende Bearbeitung eines Werkstücks bereit und weist einen Sitz 24 zur Aufnahme eines auswechselbaren Schneideinsatzes 3 auf, der in den Fig. 1 und Fig. 2 ebenfalls schematisch dargestellt ist. Wie insbesondere in Fig. 3 zu sehen ist, weist der Sitz 24 bei der dargestellten Ausführungsform eine Auflagefläche 25 für den Schneideinsatz 3 und zwei seitliche Anlageflächen 26 für den Schneideinsatz 3 auf. Es ist jedoch zu beachten, dass die Realisierung nicht auf diese konkrete Ausgestaltung beschränkt ist und insbesondere auch weniger oder mehr seitliche Anlageflächen 26 vorgesehen sein können.

Der Sitz 24 ist dazu ausgebildet, dass der auswechselbare Schneideinsatz 3 an diesem mittels einer Befestigungsschraube 6 befestigt werden kann. Zu diesem Zweck weist der Sitz 24 eine Gewindebohrung 27 auf, die dazu ausgebildet ist, den Gewindeabschnitt der Befestigungsschraube 6 aufzunehmen. Bei der dargestellten Ausführungsform ist die Gewindebohrung 27 derart ausgebildet, dass das Innengewinde unmittelbar mit dem Außengewinde der Befestigungsschraube 6 zusammenwirkt. Gemäß einer Abwandlung kann es z.B. aber auch vorgesehen sein, dass noch ein Zwischenelement aus einem weicheren Material zwischen dem Innengewinde der Gewindebohrung 27 und dem Außengewinde der Befestigungsschraube 6 angeordnet wird, z.B. ein spiralförmiges Zwischenelement. Der Grundkörper 2 mit der Gewindebohrung 27 ist dabei derart ausgelegt, dass die Befestigungsschraube 6 ein Durchgangsfoch in dem auswechselbaren Schneideinsatz 3 durchgreift, um diesen durch Zusammenwirken mit der Gewindebohrung 27 an dem Sitz 24 zu befestigen. Die Befestigungsschraube 6 kann insbesondere z.B. aus Stahl gefertigt sein.

Wie insbesondere in den Fig. 1 und Fig.2 zu sehen ist, ist der Sitz 24 derart ausgebildet, dass der daran befestigte Schneideinsatz 3 sowohl in axialer Richtung als auch in radialer Richtung (bezogen auf die Längsachse L) von dem zweiten Ende 22 des Grundkörpers 2 hervorsteht. Obwohl in Bezug auf die Ausführungsform eine Ausgestaltung gezeigt ist, bei der sich die axial von dem zweiten Ende 22 des Grundkörpers 2 hervorstehende Schneide des Schneideinsatzes 3 nicht bis zu der Längsachse L erstreckt, sodass bei dieser Ausführungsform kein Bohren ins volle Material möglich ist, kann bei einer Alternative auch eine Anordnung gewählt werden, bei der sich diese Schneide zumindest bis zur Längsachse L erstreckt, um auch ein Bohren ins volle Material zu ermöglichen. Der Schneideinsatz 3 ist bei der Ausführungsform radial gespannt, d.h. die Befestigungsschraube 6 hat eine im Wesentlichen tangentiale Ausrichtung, bei der die Hauptkomponente der Ausrichtung der Befestigungsschraube 6 die tangentiale Richtung bezüglich der Längsachse L ist.

Wie ferner insbesondere in Fig. 3 zu sehen ist, weist der freie Bereich des Grundkörpers 2, der nicht zur Aufnahme in der Bearbeitungsmaschine ausgebildet ist, in der axialen Richtung eine Auskragungslänge A auf, die einem Mehrfachen des Durchmessers D des zweiten Endes 22 entspricht. Die Auskragungslänge A entspricht insbesondere bevorzugt zumindest dem 2,5-fachen des Durchmessers D des zweiten Endes 22, mehr bevorzugt zumindest dem 3-fachen.

Der Grundkörper 2 ist ferner mit einer Spannut 28 versehen, die sich von dem Bereich des Sitzes 24 in Richtung des ersten Endes 21 erstreckt, um bei einem Betrieb des Zerspanungswerkzeugs 1 entstehende Späne abzuführen. Bei der dargestellten Ausführungsform erstreckt sich die Spannut 28 im Wesentlichen über die gesamte Auskragungslänge A.

Wie insbesondere in den Fig. 3 und Fig. 4 zu sehen ist, ist der Grundkörper 2 mit einem Kühlkanal 29 versehen, um Kühlmittel zu dem Bereich des Sitzes 24 an dem zweiten Ende 22 zuzuführen. Der Kühlkanal 29 erstreckt sich dabei ausgehend von dem ersten Ende 21 durch das Material des Grundkörpers 2. Im Bereich des zweiten Endes 22 sind bei der Ausführungsform insgesamt zwei Kühlmittelaustritte 29a und 29b ausgebildet. Der Kühlmittelaustritt 29a ist dabei derart mit einer Richtungskomponente in Richtung des ersten Endes 21 ausgerichtet, dass Kühlmittel mit einer in Richtung des ersten Endes 21 gerichteten Strömungskomponente aus dem Kühlmittelaustritt 29a austritt. In dieser Weise wird erreicht, dass entstehende Späne zuverlässig in Richtung des ersten Endes 21 abtransportiert werden. Der Kühlmittelaustritt 29b ist hingegen auf die Schneiden des Schneideinsatzes 3 ausgerichtet, um deren möglichst gute Kühlung zu erzielen. Obwohl in Bezug auf die Ausführungsform zwei solche Kühlmittelaustritte 29a und 29b gezeigt sind, ist es z.B, auch möglich, nur einen Kühlmittelaustritt oder mehr als zwei Kühlmittelaustritte vorzusehen. Insbesondere kann ferner z.B. auch ein stirnseitiger Kühlmittelaustritt an dem zweiten Ende 22 vorgesehen werden. Obwohl das Zerspanungswerkzeug 1 gemäß der Ausführungsform nur einen Kühlkanal 29 aufweist, der sich durch den Grundkörper 2 erstreckt, ist es gemäß einer Abwandlung z.B. auch möglich, mehrere solche Kühlkanäle vorzusehen oder gar keinen Kühlkanal vorzusehen.

Der beschriebene Grundkörper 2 ist durchgängig von dem ersten Ende 21 bis zu dem zweiten Ende 22 mit dem Sitz 24 und der dort ausgebildeten Gewindebohrung 27 einstückig aus einem einheitlichen Material gefertigt. Der Grundkörper 2 ist dabei aus Hartmetall (cemented carbide) oder Cermet gefertigt, wobei die Herstellung in der für diese Materialien typischen Weise in einem pulvermetallurgischen Verfahren erfolgt. Bevorzugt kann der Grundkörper 2 dabei insbesondere aus einem Hartmetall gefertigt sein, dessen Hartstoffanteil hauptsächlich durch Wolframkarbid (WC) gebildet ist und dessen duktiler Binder überwiegend durch Cobalt und/oder Nickel gebildet ist. Insbesondere sind die Auflagefläche 25 und die Gewindebohrung 27 auch in dem Hartmetall oder Cermet ausgebildet

Die Herstellung des Grundkörpers 2 erfolgt dabei derart, dass zunächst aus pulverförmigem Ausgangsmaterial für das Hartmetall oder das Cermet ein Rohling erzeugt wird, der entweder bevorzugt als noch ungesinterter Grünling oder als zumindest noch nicht vollständig verdichteter teilgesinterter Rohling vorliegen kann. Die Herstellung dieses Rohlings erfolgt dabei in der für Hartmetalle und Cermets üblichen Weise aus dem pulverförmigen Ausgangsmaterial. Der derart hergestellte, noch relativ weiche Rohling wird anschließend mechanisch bearbeitet, um den Plattensitz 24 und die Gewindebohrung 27 in dem Material auszubilden. Bei der konkreten Ausführungsform werden ferner auch die Spannut 28, der Kühlkanal 29 und die Kühlmittelaustritte 29a, 29b in diesem Zustand ausgebildet. Die Bearbeitung des Rohlings erfolgt dabei bevorzugt durch eine spanabhebende Bearbeitung, wie insbesondere Fräsen, Drehen und/oder Bohren.

Nach dem Ausbilden des Sitzes 24 mit der Gewindebohrung 27 und von gegebenenfalls weiteren geometrischen Ausgestaltungen, wie der Spannut 28, des Kühlkanals 29, etc., wird der derart bearbeitete Rohling in an sich bekannter Weise durch Sintern zu dem Zerspanungswerkzeug-Grundkörper 2 aus Hartmetall oder Cermet weiterverarbeitet, wodurch das Material seine gewünschte Dichte, Härte und Festigkeit erhält. Bei der Ausführungsform wird ferner der Außenumfang des derart erzeugten Grundkörpers 2 durch Schleifen weiterbearbeitet, was es ermöglicht, die Wirkungen eines gegebenenfalls bei dem Sintern auftretenden geringen Verzugs zu kompensieren. Es kann dabei der gesamte Außenumfang übergeschliffen werden, um eine gute Rundlaufgenauigkeit zu erzielen. Wenn eine besonders exakte Positionierung und Ausrichtung des auswechselbaren Schneideinsatzes 3 gewünscht sein sollte, können ferner gegebenenfalls auch noch Bereiche des Sitzes 24 durch Schleifen nachbearbeitet werden. Gegebenenfalls kann z.B. auch die Spannut 28 z.B. durch Polieren oder Ähnliches nachbearbeitet werden. Um eine besonders kostengünstige Realisierung zu ermöglichen, kann der Außenumfang des Zerspanungswerkzeug-Grundkörpers 2 z.B. auch nur an dem zum Befestigen an der Aufnahme ausgebildeten ersten Ende 21 geschliffen sein.

Bei der Ausführungsform wird der Zerspanungswerkzeug-Grundkörper 2 noch in einem CVD- oder PVD-Verfahren mit einer Hartstoffbeschichtung, bevorzugt einer keramischen Hartstoffbeschichtung, versehen, um dessen Korrosionsbeständigkeit zu erhöhen und insbesondere ein Herauslaugen bzw. Herauslösen des metallischen Binders ausgehend von der Oberfläche zuverlässig zu verhindern. Eine Ausbildung der Beschichtung in einem CVD-Verfahren hat dabei den Vorteil, dass auch schwer zugängliche Bereiche, wie insbesondere die Gewindegänge der Gewindebohrung 27, zuverlässig beschichtet werden können. Je nach gewünschter Beschichtung kann diese jedoch z.B. gegebenenfalls auch in einem galvanischen oder nasschemischen Verfahren aufgebracht werden. Bei der vorliegenden Ausführungsform erfolgt z.B. eine Beschichtung in einem CVD-Verfahren mit einer Titandiborid-Beschichtung. Es sind jedoch auch andere Hartstoffbeschichtungen möglich, wie z.B. mit Aluminiumoxid, Titannitrid, Titankarbonitrid, Titanaluminiumnitrid, etc.

Der Schneideinsatz 3 kann ebenfalls aus Hartmetall oder Cermet ausgebildet sein. Das Hartmetall oder Cermet des Schneideinsatzes 3 kann sich dabei aber von dem Hartmetall oder Cermet des Grundkörpers unterscheiden, insbesondere eine andere Zusammensetzung aufweisen. Alternativ ist es z.B. auch möglich, den Schneideinsatz 3 oder zumindest dessen als Schneiden dienende Bereiche aus polykristallinem Diamant (PKD), kubischem Bornitrid (cBN) oder einer Schneidkeramik auszubilden. Der Schneideinsatz 3 kann insbesondere ferner in an sich bekannter Weise mit einer Hartstoffbeschichtung versehen sein, die z.B. mittels eines PVD- (physical vapor deposition) oder CVD-Verfahrens (chemical vapor deposition) abgeschieden sein kann.

### ZWEITE AUSFÜHRUNGSFORM

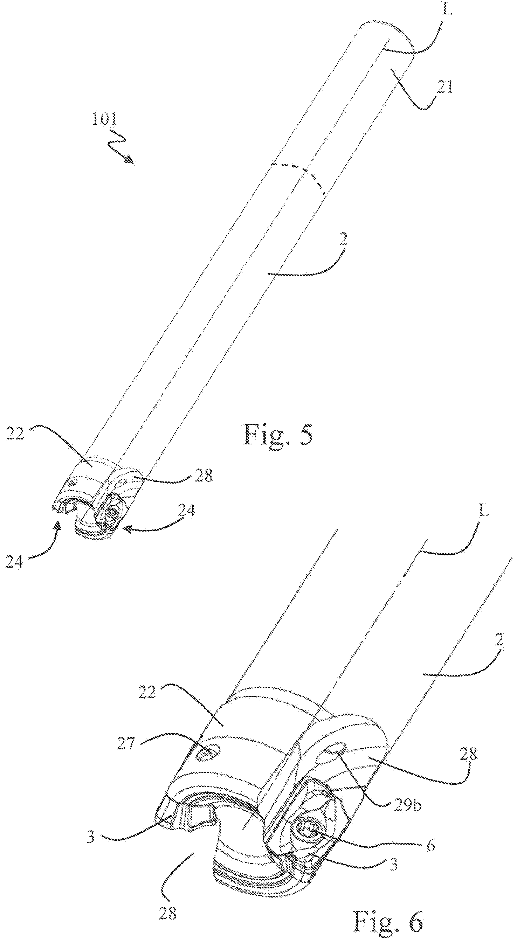

Eine zweite Ausführungsform eines Zerspanungswerkzeugs 101 wird im Folgenden unter Bezugnahme auf die Fig. 5 bis Fig. 8 eingehender beschrieben. In Bezug auf die zweite Ausführungsform werden dabei für entsprechende Komponenten dieselben Bezugszeichen wie bei der Beschreibung der ersten Ausführungsform verwendet.

Das Zerspanungswerkzeug 101 gemäß der zweiten Ausführungsform ist als ein Fräswerkzeug ausgebildet und weist einen Zerspanungswerkzeug-Grundkörper 2 mit einem ersten Ende 21 und einem zweiten Ende 22 auf, der sich entlang einer Längsachse L erstreckt, die auch der Rotationsachse des Zerspanungswerkzeuges 101 entspricht. Auch bei der zweiten Ausführungsform ist das erste Ende 21 zum Befestigen an einer Aufnahme einer (nicht-dargestellten) Bearbeitungsmaschine ausgebildet.

Im Unterschied zu der zuvor beschriebenen ersten Ausführungsform sind an dem zweiten Ende 22, der einen Bearbeitungsabschnitt des Fräswerkzeugs bildet, bei der zweiten Ausführungsform zwei Sitze 24 zur Aufnahme von jeweils einem auswechselbaren Schneideinsatz 3 vorgesehen. Obwohl bei der konkret dargestellten Ausführungsform nur zwei solche Sitze 24 vorgesehen sind, ist es z.B. auch möglich noch mehr derartige Sitze 24 an dem zweiten Ende 22 auszubilden, insbesondere über den Umfang des zweiten Endes 22 verteilt anzuordnen. Wie bei der ersten Ausführungsform sind die Sitze 24 derart angeordnet, dass ein auswechselbarer Schneideinsatz 3 darin jeweils derart befestigt werden kann, dass er sowohl in der axialen Richtung als auch in der radialen Richtung mit Schneiden von dem zweiten Ende 22 hervorsteht. Die Sitze 24 sind dabei wiederum für eine radiale Anordnung der Schneideinsätze 3 ausgebildet.

Auch bei der zweiten Ausführungsform weisen die Sitze 24 jeweils eine Auflagefläche 25 für den jeweiligen Schneideinsatz 3 sowie seitliche Anlageflächen 26 auf, wobei wiederum auch andere Ausgestaltungen möglich sind. Die Sitze 24 weisen jeweils eine Gewindebohrung 27 auf, die unmittelbar in dem Material des Grundkörpers 2, der wiederum aus Hartmetall oder Cermet gefertigt ist, ausgebildet ist. Da die Sitze 24 bei der zweiten Ausführungsform Identisch zueinander ausgebildet sind, wird im Folgenden jeweils nur auf einen von diesen Bezug genommen. Wie zuvor In Bezug auf die erste Ausführungsform beschrieben wurde, sind auch bei der zweiten Ausführungsform das erste Ende 21 und das zweite Ende 22 mit dem Sitz 24 und der Gewindebohrung 27 einstückig aus Hartmetall oder Cermet ausgebildet. Ferner ist wiederum der Sitz 24 jeweils zur Aufnahme eines auswechselbaren Schneideinsatzes 3 derart, dass eine Befestigungsschraube 6 ein Durchgangsloch in dem Schneideinsatz 3 durchgreift und mit ihrem Gewindeabschnitt mit dem Innengewinde der Gewindebohrung 27 zusammenwirkt, ausgebildet. Auch im Fall der zweiten Ausführungsform können die Gewindegänge der Gewindebohrung 27 dabei unmittelbar mit den Gewindegängen der Befestigungsschraube 6 zusammenwirken oder es kann ein zusätzliches Zwischenelement dazwischen vorgesehen sein.

Im Unterschied zu der ersten Ausführungsform sind die Spannuten 28, die sich an die jeweiligen Sitze 24 anschließen und in Richtung des ersten Endes 21 erstrecken, bei der zweiten Ausführungsform in der axialen Richtung kürzer ausgeführt und erstrecken sich nicht über die gesamte Auskragungslänge A. Der freie Bereich des Grundkörpers 2 weist eine Auskragungslänge A auf, die auch bei der zweiten Ausführungsform ein Mehrfaches des Durchmessers D des zweiten Endes 22 beträgt.

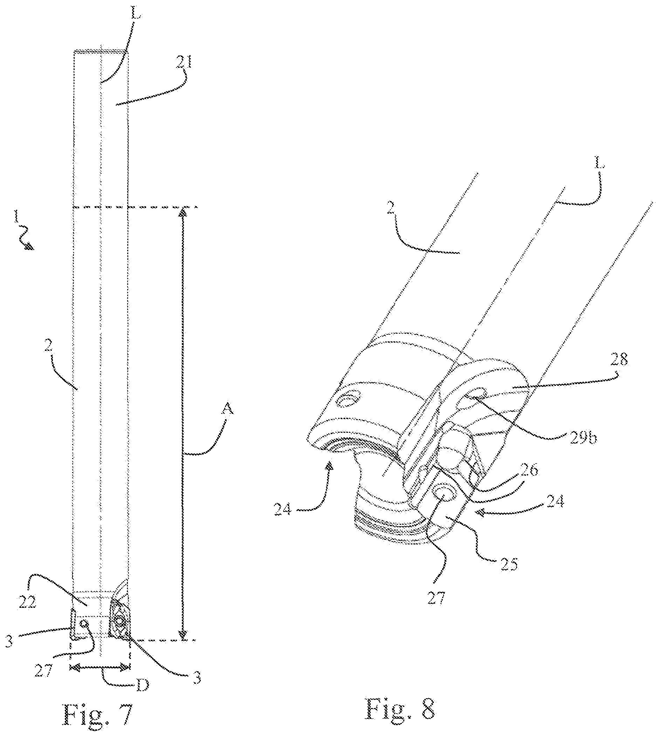

Wie insbesondere in den Fig. 6 und Fig. 8 zu sehen ist, weist der Grundkörper 2 im Bereich des zweiten Endes 22 Kühlmittelaustritte 29b auf, die den jeweiligen Sitzen 24 zugeordnet sind und über einen nicht dargestellten Kühlkanal, der sich von dem ersten Ende 21 durch den Grundkörper 2 erstreckt, mit Kühlmittel versorgt werden können. Auch in diesem Fall ist es möglich, mehrere solche Kühlkanäle vorzusehen oder gegebenenfalls auf die Ausbildung von Kühlkanälen ganz zu verzichten.

Die Herstellung des Zerspanungswerkzeug-Grundkörpers 2 gemäß der zweiten Ausführungsform erfolgt wie im Hinblick auf die erste Ausführungsform beschrieben, indem zunächst ein ungesinterter bzw. zumindest noch nicht vollständig gesinterter Rohling für den Grundkörper 2 in einem pulvermetallurgischen Herstellungsverfahren aus Ausgangspulver für das Hartmetall bzw. Cermet hergestellt und mechanisch bearbeitet wird, um die Sitze 24, die Spannuten 28, den Kühlkanal und die Kühlmittelaustritte 29b auszubilden. Dabei wird insbesondere auch die Gewindebohrung 27 in dem Material des Rohlings ausgebildet.

Bei dem anschließenden Sintern des derart bearbeiteten Rohlings wird der Grundkörper 2 gebildet, der anschließend insbesondere durch Schleifen in die endgültige Form gebracht wird. Auch bei der zweiten Ausführungsform wird dabei der Außenumfang des Grundkörpers 2 geschliffen, um einen gegebenenfalls durch das Sintern verursachten leichten Verzug zu kompensieren. Bei Bedarf können auch Bereiche der Sitze 24 z.B. durch Schleifen nachbearbeitet werden. Auch bei der zweiten Ausführungsform ist es z.B. möglich, nur den Außenumfang im Bereich des ersten Endes 21 durch Schleifen zu bearbeiten.

Auch bei der zweiten Ausführungsform kann ferner, wie bereits mit Bezug auf die erste Ausführungsform beschrieben, eine Hartstoffbeschichtung zumindest bereichsweise auf der Oberfläche des Zerspanungswerkzeug-Grundkörpers 2 zusätzlich aufgebracht sein, um insbesondere eine erhöhte Korrosionsbeständigkeit zu erzielen.

### ABWANDLUNGEN

Bei einer vorteilhaften Weiterbildung der Ausführungsformen weist das Innengewinde der Gewindebohrung 27 eine leicht von der Gewindesteigung des Außengewindes der Befestigungsschraube 6 abweichende Gewindesteigung auf. Bevorzugt kann der Unterschied in der Gewindesteigung dabei zwischen 1,5 % und 8 % liegen. In dieser Weise kann eine vorteilhafte Lastverteilung auf den Gewindegängen der Gewindebohrung 27 erzielt werden, mit der ein Versagen der Gewindeverbindung durch Ausbruch unterbunden wird. Dieser Effekt kann insbesondere dann erreicht werden, wenn die Gewindesteigung der Gewindebohrung 27 größer ist als die Gewindesteigung der Befestigungsschraube 6, die aus einem elastischeren Material, wie insbesondere z.B. Stahl, gefertigt ist.

## Patentansprüche

1. Zerspanungswerkzeug-Grundkörper (2) mit
einem ersten Ende (21) zum Befestigen an einer Aufnahme einer Bearbeitungsmaschine und
einem zweiten Ende (22), das zumindest einen Sitz (24) für einen auswechselbaren Schneideinsatz (3) aufweist,
wobei der Sitz (24) eine Gewindebohrung (27) zur Aufnahme einer Befestigungsschraube (6) für den auswechselbaren Schneideinsatz (3) aufweist und
wobei das erste Ende (21) und das zweite Ende (22) mit dem Sitz (24) einstückig aus einem Hartmetall oder Cermet gebildet sind und der Außenumfang des Grundkörpers (2) an dem ersten Ende (21) geschliffen ist,
**dadurch gekennzeichnet, dass** der Grundkörper (2) pulvermetallurgisch hergestellt ist und die Struktur der Gewindebohrung (27) vor einem Sintern des Grundkörpers (2) eingebracht wurde.

2. Zerspanungswerkzeug-Grundkörper nach Anspruch 1, wobei der Grundkörper (2) mit zumindest einer Spannut (28) versehen ist, die sich von dem Sitz (24) in Richtung des ersten Endes (21) erstreckt.

3. Zerspanungswerkzeug-Grundkörper nach Anspruch 2, wobei der Grundkörper (2) eine Auskragungslänge (A) aufweist, die zumindest das 2,5-fache eines Durchmessers (D) des Grundkörpers (2) an dem zweiten Ende (22) beträgt, bevorzugt zumindest das 3-fache.

4. Zerspanungswerkzeug-Grundkörper nach einem der vorangehenden Ansprüche, wobei der Grundkörper (2) zumindest einen Kühlkanal (29) zum Zuführen von Kühlmittel zu dem Bereich des zweiten Endes (22) aufweist.

5. Zerspanungswerkzeug-Grundkörper nach Anspruch 4, wobei der zumindest eine Kühlkanal (29) einen in Richtung des ersten Endes (21) gerichteten Kühlmittelaustritt (29a) aufweist.

6. Zerspanungswerkzeug-Grundkörper nach einem der vorangehenden Ansprüche, wobei das Material des Grundkörpers (2) Hartmetall ist und als Hauptbestandteile in einen metallischen Binder eingebettete Wolframkarbidkörner aufweist.

7. Zerspanungswerkzeug-Grundkörper nach Anspruch 6, wobei der metallische Binder als Hauptbestandteile Cobalt und/oder Nickel aufweist.

8. Zerspanungswerkzeug-Grundkörper nach einem der vorangehenden Ansprüche, wobei die Oberfläche des Zerspanungswerkzeug-Grundkörpers mit einer Hartstoffbeschichtung beschichtet ist.

9. Zerspanungswerkzeug-Grundkörper nach einem der vorangehenden Ansprüche, wobei der Sitz (24) zur Aufnahme des Schneideinsatzes (3) derart, dass er an dem zweiten Ende (22) in radialer und in axialer Richtung von dem Grundkörper (2) hervorsteht, ausgebildet ist.

10. Zerspanungswerkzeug-Grundkörper nach einem der vorangehenden Ansprüche, wobei das zweite Ende (22) eine Mehrzahl von Sitzen (24) zur Aufnahme von auswechselbaren Schneideinsätzen (3) aufweist.

11. Zerspanungswerkzeug (1) mit einem
Zerspanungswerkzeug-Grundkörper (2) nach einem der vorangehenden Ansprüche und zumindest einem auswechselbaren Schneideinsatz (3), der mittels einer Befestigungsschraube (6), die ein Durchgangsloch in dem Schneideinsatz (3) durchgreift und mit der Gewindebohrung (27) zusammenwirkt, an dem zumindest einen Sitz (24) befestigt ist.

12. Verfahren zum Herstellen eines Zerspanungswerkzeug-Grundkörpers (2) mit den Schritten:
Erzeugen eines ungesinterten oder teilgesinterten Rohlings des Grundkörpers (2), der ein erstes Ende (21) zum Befestigen an einer Aufnahme einer Bearbeitungsmaschine und ein diesem gegenüberliegendes zweites Ende (22) aufweist, in einem pulvermetallurgischen Verfahren aus Ausgangspulver für Hartmetall oder Cermet,
Ausbilden eines Sitzes (24) für einen auswechselbaren Schneideinsatz (3) mit einer Gewindebohrung (27) zur Aufnahme einer Befestigungsschraube (6) für den Schneideinsatz (3) in dem Rohling an dem zweiten Ende (22), und anschließendes
Sintern des bearbeiteten Rohlings zu dem Zerspanungswerkzeug-Grundkörper (2),
wobei nach dem Sintern eine Schleifbearbeitung des Außenumfangs des Grundkörpers (2) an dem ersten Ende (21) erfolgt.

13. Verfahren nach Anspruch 12, wobei das Ausbilden des Sitzes (24) durch eine spanabhebende Bearbeitung des Rohlings erfolgt.

14. Verfahren nach einem der Ansprüche 12 oder 13, wobei die Oberfläche des Zerspanungswerkzeug-Grundkörpers (2) mit einer Hartstoffbeschichtung beschichtet wird.

## Claims

1. Cutting-tool main body (2) having a first end (21) for attachment to a receiving member of a processing machine and a second end (22) which has at least one seat (24) for a replaceable cutting insert (3),
wherein the seat (24) has a threaded bore (27) for receiving a securing screw (6) for the replaceable edge insert (3), and
wherein the first end (21) and the second end (22) with the seat (24) are formed integrally from a cemented carbide or Cermet and the external circumference of the main body (2) is ground at the first end (21),
**characterized in that** the main body (2) is produced in a powder metallurgical manner and the structure of the threaded bore (27) has been introduced before the main body (2) is sintered.

2. Cutting-tool main body according to Claim 1, wherein the main body (2) is provided with at least one groove (28) for chips which extends from the seat (24) in the direction of the first end (21).

3. Cutting-tool main body according to Claim 2, wherein the main body (2) has a projection length (A) which is at least 2.5 times a diameter (D) of the main body (2) at the second end (22), preferably at least 3 times.

4. Cutting-tool main body according to any one of the preceding claims, wherein the main body (2) has at least one cooling channel (29) for supplying coolant to the region of the second end (22).

5. Cutting-tool main body according to Claim 4, wherein the at least one cooling channel (29) has a coolant outlet (29a) which is directed in the direction of the first end (21).

6. Cutting-tool main body according to any one of the preceding claims, wherein the material of the main body (2) is cemented carbide and has as the main components tungsten carbide particles which are embedded in a metal binder.

7. Cutting-tool main body according to Claim 6, wherein the metal binder has cobalt and/or nickel as the main components.

8. Cutting-tool main body according to any one of the preceding claims, wherein the surface of the cutting-tool main body is covered with a hard material coating.

9. Cutting-tool main body according to any one of the preceding claims, wherein the seat (24) is configured for receiving the cutting insert (3) in such a manner that it projects at the second end (22) in a radial and in an axial direction from the main body (2).

10. Cutting-tool main body according to any one of the preceding claims, wherein the second end (22) has a plurality of seats (24) for receiving replaceable cutting inserts (3).

11. Cutting tool having a cutting-tool main body (2) according to any one of the preceding claims and at least one replaceable cutting insert (3) which is secured to the at least one seat (24) by means of a securing screw (6) which engages through a through-hole in the cutting insert (3) and which cooperates with the threaded bore (27).

12. Method for producing a cutting-tool main body (2) having the steps of:
producing an unsintered or partially sintered blank of the main body (2) which has a first end (21) for attachment to a receiving member of a processing machine and
a second end (22) which is opposite it, in a powder metallurgical method from initial powder for cemented carbide or Cermet,
forming a seat (24) for a replaceable cutting insert (3) having a threaded bore (27) for receiving a securing screw (6) for the cutting insert (3) in the blank at the second end (22) and subsequently
sintering the processed blank to form the cutting-tool main body (2),
wherein after the sintering a grinding processing operation of the external circumference of the main body (2) is carried out at the first end (21).

13. Method according to claim 12, wherein the formation of the seat (24) is carried out by chip-removing processing of the blank.

14. Method according to either claim 12 or claim 13, wherein the surface of the cutting-tool main body (2) is coated with a hard material coating.

## Revendications

1. Corps de base d'outil d'usinage par enlèvement de copeaux (2) avec
une première extrémité (21) pour la fixation à un logement d'une machine d'usinage et
une deuxième extrémité (22), qui présente au moins un siège (24) pour un insert de coupe interchangeable (3), le siège (24) présentant un alésage taraudé (27) pour recevoir une vis de fixation (6) pour l'insert de coupe interchangeable (3), et
la première extrémité (21) et la deuxième extrémité (22) étant formées d'une seule pièce avec le siège (24) à partir d'un métal dur ou d'un cermet, et la périphérie extérieure du corps de base (2) étant affûtée à la première extrémité (21),
**caractérisé en ce que**
le corps de base (2) est fabriqué par métallurgie des poudres et la structure de l'alésage taraudé (27) a été aménagée avant un frittage du corps de base (2).

2. Corps de base d'outil d'usinage par enlèvement de copeaux selon la revendication 1, dans lequel le corps de base (2) est pourvu d'au moins une rainure à copeaux (28) qui s'étend depuis le siège (24) en direction de la première extrémité (21).

3. Corps de base d'outil d'usinage par enlèvement de copeaux selon la revendication 2, dans lequel le corps de base (2) présente une longueur de porte-à-faux (A) qui est au moins égale à 2,5 fois un diamètre (D) du corps de base (2) à la deuxième extrémité (22), de préférence au moins 3 fois.

4. Corps de base d'outil d'usinage par enlèvement de copeaux selon l'une quelconque des revendications précédentes, dans lequel le corps de base (2) présente au moins un canal de refroidissement (29) pour amener un fluide de refroidissement à la zone de la deuxième extrémité (22).

5. Corps de base d'outil d'usinage par enlèvement de copeaux selon la revendication 4, dans lequel l'au moins un canal de refroidissement (29) présente une sortie de fluide de refroidissement (29a) dirigée en direction de la première extrémité (21).

6. Corps de base d'outil d'usinage par enlèvement de copeaux selon l'une quelconque des revendications précédentes, dans lequel le matériau du corps de base (2) est un métal dur et présente en tant que composants principaux des grains de carbure de tungstène noyés dans un liant métallique.

7. Corps de base d'outil d'usinage par enlèvement de copeaux selon la revendication 6, dans lequel le liant métallique présente en tant que composants principaux du cobalt et/ou du nickel.

8. Corps de base d'outil d'usinage par enlèvement de copeaux selon l'une quelconque des revendications précédentes, dans lequel la surface du corps de base d'outil d'usinage par enlèvement de copeaux est recouverte d'un revêtement de matière dure.

9. Corps de base d'outil d'usinage par enlèvement de copeaux selon l'une quelconque des revendications précédentes, dans lequel le siège (24) est réalisé de manière pour recevoir l'insert de coupe (3) à faire saillie dans la direction radiale et axiale à partir du corps de base (2) au niveau de la deuxième extrémité (22) .

10. Corps de base d'outil d'usinage par enlèvement de copeaux selon l'une quelconque des revendications précédentes, dans lequel la deuxième extrémité (22) présente une pluralité de sièges (24) pour recevoir des inserts de coupe interchangeables (3).

11. Outil d'usinage par enlèvement de copeaux (1) avec un corps de base d'outil d'usinage par enlèvement de copeaux (2) selon l'une quelconque des revendications précédentes et au moins un insert de coupe interchangeable (3) fixé à l'au moins un siège (24) au moyen d'une vis de fixation (6) qui traverse un trou traversant dans l'insert de coupe (3) et coopère avec l'alésage taraudé (27).

12. Procédé de fabrication d'un corps de base d'outil d'usinage par enlèvement de copeaux (2) avec les étapes suivantes :
la production d'une ébauche non frittée ou partiellement frittée du corps de base (2), qui présente une première extrémité (21) destinée à être fixée à un logement d'une machine d'usinage et une deuxième extrémité (22) opposée à la première, dans un procédé de métallurgie des poudres à partir de poudre de départ pour métal dur ou cermet,
la réalisation d'un siège (24) pour un insert de coupe interchangeable (3) avec un alésage taraudé (27) pour recevoir une vis de fixation (6) pour l'insert de coupe (3) dans l'ébauche à la deuxième extrémité (22), et ensuite
le frittage de l'ébauche usinée en le corps de base d'outil d'usinage par enlèvement de copeaux (2),
un procédé de meulage de la périphérie extérieure du corps de base (2) à la première extrémité (21) étant effectué après le frittage.

13. Procédé selon la revendication 12, dans lequel la réalisation du siège (24) est effectuée par un usinage par enlèvement de copeaux de l'ébauche.

14. Procédé selon l'une quelconque des revendications 12 ou 13, dans lequel la surface du corps de base d'outil d'usinage par enlèvement de copeaux (2) est revêtue d'un revêtement de matière dure.
